Europäisches Patentamt

European Patent Office

Office européen des brevets

(19)

(11) Veröffentlichungsnummer : **0 120 212**
**B1**

# (12) EUROPÄISCHE PATENTSCHRIFT

(45) Veröffentlichungstag der Patentschrift :
01.10.86

(21) Anmeldenummer : 84100756.0

(22) Anmeldetag : 21.01.84

(51) Int. Cl.⁴ : **C 25 B 9/00, H 01 M 8/10**

(54) Verfahren zur Herstellung einer elektrisch leitenden Schicht auf der Oberfläche eines Feststoffelektrolyten und elektrisch leitenden Schicht.

(30) Priorität : 25.02.83 CH 1069/83

(43) Veröffentlichungstag der Anmeldung :
03.10.84 Patentblatt 84/40

(45) Bekanntmachung des Hinweises auf die Patenterteilung : 01.10.86 Patentblatt 86/40

(84) Benannte Vertragsstaaten :
CH DE FR GB IT LI

(56) Entgegenhaltungen :
EP-A- 0 026 969
EP-A- 0 026 979
GB-A- 2 069 006
GB-A- 2 071 152
PATENTS ABSTRACTS OF JAPAN, Band 6, Nr. 94, Seite 4C105;

(73) Patentinhaber : BBC Aktiengesellschaft Brown, Boveri & Cie.
Haselstrasse
CH-5401 Baden (CH)

(72) Erfinder : Killer, Eric
Zentralstrasse 95
CH-5430 Wettingen (CH)
Erfinder : Scherer, Günther
Birchhofstrasse 8
CH-5412 Gebenstorf (CH)
Erfinder : Stucki, Samuel
Sternenstrasse 7
CH-5415 Nussbaumen (CH)

EP 0 120 212 B1

## Beschreibung

Die erfindung geht aus von einem Verfahren zur Herstellung einer elektrisch leitenden Schicht nach der Gattung des Oberbegriffs des Anspruch 1 und von einer elektrisch leitenden Schicht nach der Gattung des Oberbegriffs des Anspruchs 7.

Elektrochemische Zellen, welche einen Festostoffelektrolyten in Form einer Ionentauschermembran aus einem Kunststoffpolymer verwenden, zeichnen sich dadurch aus, dass die Elektrolyten auf beiden Seiten dieser Membran aufgebracht und in innigem Kontakt mit derselben stehen müssen. Aus Gründen der verlangten Korrosionsbeständigkeit und der thermodynamisch-chemischen Stabilität werden für die eigentlichen Elektroden Edelmetalle und/oder deren Verbindungen verwendet, welche meist zugleich als Katalysatoren wirken. Um den Stofftransport an die Phasengrenze Elektrolyt/Elektrode zu gewährleisten, müssen die Elektroden porös ausgeführt werden. Aus wirtschaftlichen Gründen werden im Interesse der Ersparnis an Edelmetallen die letzteren in möglichst geringer Menge und möglichst fein verteilt auf den Feststoffelektrolyten aufgebracht. Es ist daher selbstverständlich, dass der Beschichtungstechnik von Membranen zur Herstellung poröser Elektroden in diesem Zusammenhang eine überragende Bedeutung zukommt.

Von den verschiedenen Beschichtungsverfahren seien die folgenden erwähnt :

— Heisspressen einer gesinterten Mischung aus Polytetrafluoräthylen- und Katalysatorpulver auf die Ionenaustauschermembran (US-A-3 297 484).

— Heiss-Aufpressen einer Elektrokatalysator-Partikel enthaltenden verformten Thermoplast-Oberflächenschicht auf einen Polymer-Feststoffelektrolyten, wobei die Thermoplast-Oberflächenschicht aus einem hydrophilen, fluorierten Ionenaustauschermaterial besteht. Ein Gemenge metallischer oder oxidischer Partikel wird mit einem bei höherer Temperatur plastisch fliessenden organischen Binder (Thermoplast) auf die Feststoffelektrolyt-Membran aufgepresst (Vergl. GB-A-2 069 006).

— Chemische bzw. elektrochemische Abscheidung des Katalysators an der Phasengrenze der Membran (H. Takenaka et al., Proc. 3, rd World Hydrogen Energy Conference, Tokyo 1980, Vol. 1, p. 107 ; US-A-4 326 930).

— Ueberführung der Ionenaustauschermembran von der Säureform in die Sulfonylchloridform durch Behandlung mit Phosphorpentachlorid oder Phosphoroxychlorid bzw. Ueberführung in die Ammoniumform durch Behandlung mit einem ternären Amin oder einer quartären Ammoniumbase. Die umgewandelten Formen des Membranwerkstoffs sind im Gegensatz zur Säureform thermoplastisch und lassen sich nach den diesbezüglichen Technologien weiterverarbeiten. Aufstreuen und Einwalzen oder Einpressen der elektro-katalytisch aktiven Pulver auf bzw. in die thermoplastische Masse der Membran (DE-A-3 036 066).

Die genannten Verfahren erfordern einen beträchtlichen apparativen Aufwand in Form von Pressen, chemischen und elektrolytischen Vorrichtungen etc., welcher umso mehr ins Gewicht fällt, je grösser die zu beschichtende Fläche der Ionenaustauschermembran ist. Ausserdem sind gewisse Verfahren nicht ohne weiteres auf beliebige Elektrokatalysatoren anwendbar. Es besteht daher ein Bedürfnis nach neuen kostengünstigen Beschichtungsverfahren.

Der Erfindung liegt die Aufgabe zugrunde, ein Beschichtungsverfahren zur Herstellung einer elektrisch leitenden Schicht auf der Oberfläche eines in Form einer Ionenaustauschermembran vorliegenden Feststoffelektrolyten anzugeben, welches bei minimalen apparativen Aufwand die Beschichtung grossflächiger Membranen ermöglicht. Dabei soll der Verbrauch an teuren, als Elektrodenwerkstoffe und Elektrokatalysator zu verwendender Edelmetallen möglichst niedrig und ihre Ausnutzung dank optimaler Verteilung und Struktur in der Oberfläche des Feststoffelektrolyten möglichst hoch sein.

Diese Aufgabe wird durch die im kennzeichnenden Teil der Ansprüche 1 und 7 angegebenen Merkmale gelöst.

Die Erfindung wird anhand des nachfolgenden, durch Figuren erläuterten Ausführungsbeispiels beschrieben.

Dabei zeigt :

Figur 1 das Fliessbild des Verfahrens in Blockdarstellung ;

Figur 2 eine nach dem Verfahren hergestellte elektrisch leitende Schicht auf der Oberfläche eines Feststoffelektrolyten.

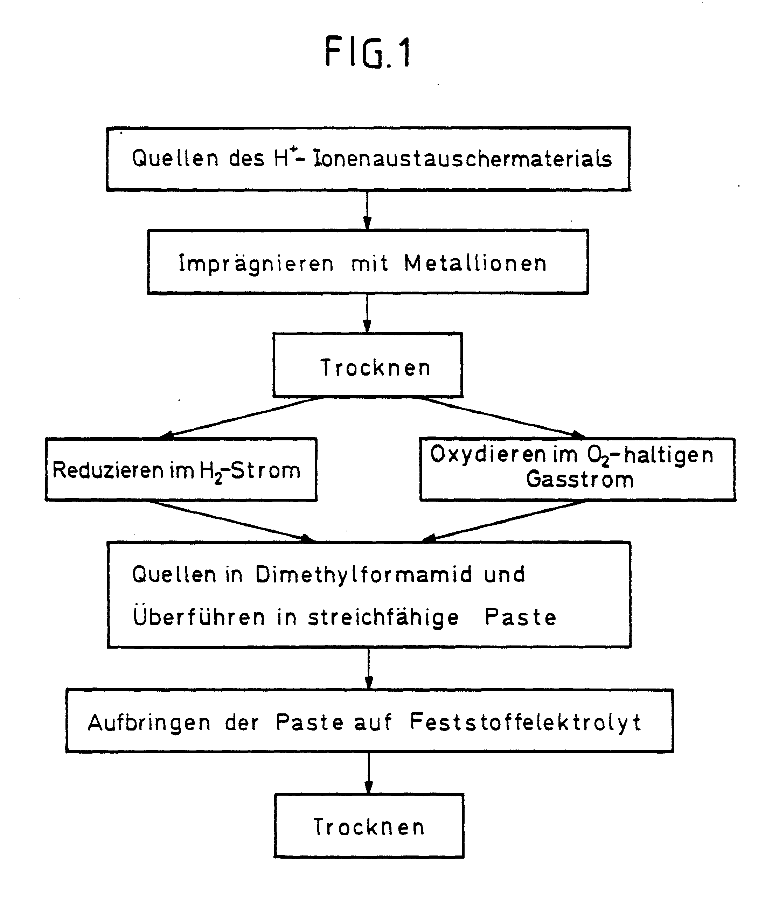

Fig. 1 zeigt das Fliessbild des Verfahrens zur Herstellung einer elektrisch leitenden Schicht auf einem Feststoffelektrolyten am Beispiel der Imprägnierung des Kationenaustauschermaterials mit Edelmetallionen, Reduzieren im $H_2$-Strom bzw. Oxidieren im Luftstrom und Quellen in Dimethylformamid. Das Diagramm bedarf keiner weiteren Erläuterungen.

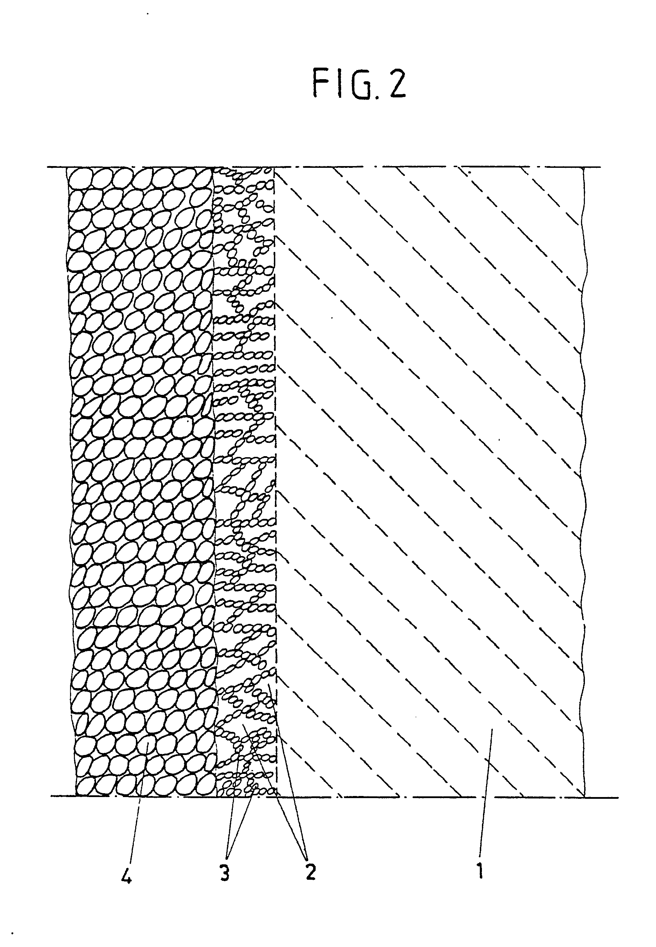

In Fig. 2 ist eine nach dem Verfahren hergestellte elektrisch leitende Schicht im Zusammenhang mit ihren benachbarten Werkstoffkomponenten dargestellt. 1 ist der Feststoffelektrolyt, welcher beispielsweise aus einer Folie (Membran) aus einem Ionenaustauschermaterial bestehen kann. Bevorzugterweise wird dafür ein Polymer mit Sulfosäuren als ionenaustauschende Gruppen verwendet. 2 ist ein elektronisch nichtleitendes organisches Kationenaustauschermaterial auf der Basis eines perfluorierten Polymers mit Sulfosäuren, welches gewissermassen die Matrix der elektrisch leitenden Schicht bildet. Darin sind alle miteinander in leitender Verbindung stehenden Partikel 3 in feiner Verteilung eingelagert. Die Edelmetallpartikel 3 haben vorzugsweise einen Durchmesser von 1 bis 50 nm und einen mittleren Abstand von 1 bis 10 nm, wobei die Oberflächenschicht der Belegung ca. 0,01 bis 1 mg/cm² betragen kann. 4 ist der unter den herrschenden Bedingungen chemisch inaktive, d. h. korrosionsbeständige poröse, elektrisch leitende Stromkollektor, der sowohl flüssigkeits- wie gasdurchlässig sein muss.

Die Erfindung beruht auf der Eigenschaft vieler organischer Feststoffelektrolyte (als Ionenaustauscher wirkende Polymere), solvatisierte, zur Aufnahme von Metallionen befähigte Bereiche aufzuweisen. Dabei wird die günstige Konfiguration und Dimension derartiger für den Ionentransport in solchen Membranen existierenden « Kanäle » ausgenutzt. Dies erlaubt eine vorteilhafte Abstimmung der Geometrie an der Grenzfläche Elektrolyt (Membran)/Elektrode (Elektrokatalysator). Es gilt also, die solvatisierten Bereiche der Grenzfläche teilweise durch Edelmetallpartikel zu ersetzen, welche untereinander in engem leitenden Kontakt stehen und derart ein die Grenzfläche durchdringendes Netz bilden. Dadurch kann die zum einwandfreien Funktionieren notwendige Menge an Elektrokatalysatormaterial in Form von Edelmetall beträchtlich gesenkt und dessen Wirksamkeit im Betrieb erhöht werden. Die Konzentration der bei der Imprägnierung des Kationenaustauschermaterials verwendeten Edelmetallionenlösung kann dabei gezielt eingestellt werden, so dass die optimale Geometrie zwischen Kationenaustauscher-Matrix und schliesslich vorhandener Edelmetallpartikeln erzielt werden kann. Es wird in dieser Weise die « Clusterstruktur » des als Kationenaustauscher wirkenden organischen Polymers ausgenutzt, um die Elektrokatalysatorteilchen mit ähnlichen Dimensionen innerhalb der Polymerstruktur zu erzeugen.

Durch die innige Vermengung des Kationenaustauschermaterials 2 mit dem Netz der Edelmetallpartikel 3 werden vorzügliche Bedingungen in der Grenzfläche geschaffen, in welcher die elektrochemischen Reaktionen abzulaufen haben.

Nach dem vorliegenden Verfahren wird nun diese aus Ionenaustauschermaterial 2 und Partikeln 3 bestehende heterogene Masse in einem organischen polaren Lösungsmittel (Dimethylformamid, Dimethylacetamid, Propanol, Methyl- oder Aethylalkohol) gequollen und in eine streichfähige Paste übergeführt, welche ihrerseits auf den zu beschichtenden Feststoffelektrolyten 1 aufgebracht werden kann. Dies kann durch Pinseln, Spachteln oder nach dem Siebdruckverfahren geschehen.

Als Ionenaustauschermaterial 2 kommt ein perfluoriertes, Polymer mit Sulfosäuren als ionenaustauschende Gruppen in Frage. Der Feststoffelektrolyt 1 kann aus dem gleichen oder einem ähnlichen Material bestehen. Die zur Imprägnierung verwendete Lösung enthält Ionen einer oder mehrerer Platinmetalle, bevorzugt Platin selbst oder eine Mischung von Ruthenium/Iridium. Das Metallsalz kann beispielsweise als Chlorid (Rutheniumchlorid $RuCl_3$), die zum ersten Quellen des Ionenaustauschermaterials 2 verwendete Flüssigkeit als Aethanol und das Lösungsmittel für das Chlorid ebenfalls als Aethanol vorliegen. Zur Reduktion der Metallsalzionen zu elementaren Metallpartikeln 3 kann ein reduzierender Gasstrom, beispielsweise $H_2$-Strom dienen.

Temperatur des Gasstromes : 50 bis 250 °C.

Ausführungsbeispiel I

Siehe Figuren 1 und 2 :

Ein Ionenaustauscherwerkstoff vom Typ perfluorierter Polymer mit Sulfosäuren (Handelsname « Nafion 1100 » von Du Pont) wurde in Aethanol bei 80 °C gequollen und mit einer gesättigten alkoholischen Lösung von Rutheniumchlorid ($RuCl_3$) versetzt. Danach wurde der auf diese Weise gequollene und mit dem Edelmetallsalz imprägnierte Kunststoffpolymer getrocknet und anschliessend bei 150 °C während 60 min einer reduzierenden Atmosphäre (Wasserstoffstrom) ausgesetzt. Bei diesem Vorgang wurden die Rutheniumionen zu metallischen Partikeln von elementarem Ruthenium mit einem durchschnittlichen Durchmesser von ca. 5 nm reduziert. Diese in der Grundmasse eingelagerten Rutheniumpartikel konnten im Elektronenmikroskop nachgewiesen werden. Nach erneutem Quellen und Auflösung der so erhaltenen Substanz in Dimethylformamid bei 150 °C unter einem Druck von 7 MPa wurde eine streichfähige Paste erzeugt, welche ihrerseits auf eine Ionenaustauschermembran des Typs « Nafion » aufgetragen wurde. Diese Schicht haftete fest auf dem Substrat und hatte nach dem Verdunsten des Lösungsmittels eine durchschnittliche Dicke von ca. 50 μm. Auf diese Art und Weise können Schichtdicken von ca. 10 bis 100 μm hergestellt werden (Ionenaustauschermaterial 2 plus Metallpartikel 3).

Ausführungsbeispiel II

Siehe Figuren 1 und 2 :

Gemäss Beispiel I wurde der Ionenaustauscherwerkstoff in Form eines Polymer-Granulats in Aethanol gequollen und mit einer Lösung von $RuCl_3$ versetzt. Hierauf wurde das auf diese Weise hergestellte getrocknete Pulver bei 190 °C während 3 h einer oxydierenden Atmosphäre (Luftstrom) ausgesetzt. Dadurch wurden in der Matrix des Ionenaustauschers Partikel aus Rutheniumoxyd von durchschnittlich 10 nm Durchmesser gebildet. Der weitere Verlauf der Verfahrensschritte erfolgte nach dem gleichen Schema wie in Beispiel I.

Die verschiedenen Verfahrensschritte des Quellens, Imprägnierens (Austausch von H-Ionen durch Edelmetallionen), Chemischen Reagierens (Reduzieren bzw. Oxydieren) können auch mehrmals hintereinander durchgeführt werden. Dadurch kann der Gehalt an edelmetallhaltigen Partikeln in der Oberflächenschicht des Polymers nach den Bedürfnissen gezielt eingestellt werden.

## Patentansprüche

1. Verfahren zur Herstellung einer elektrisch leitenden Schicht auf der Oberfläche eines Feststoffelektrolyten (1), dadurch gekennzeichnet, dass ein organisches Kationenaustauschermaterial (2) auf der Basis eines perfluorierten Polymers mit Sulfosäuren in einem polaren Lösungsmittel gequollen, mit einer Lösung von Edelmetallionen imprägniert, getrocknet und im Gasstrom bei einer Temperatur von 50 bis 250 °C einer oxydierenden oder einer reduzierenden Atmosphäre ausgesetzt wird, wobei die Edelmetallionen in leitende, miteinander in leitender Verbindung stehende Partikel (3) von 1 bis 50 nm Durchmesser übergeführt werden, dass das auf diese Weise dotierte Kationenaustauschermaterial (2) in einem organischen, polaren Lösungsmittel gequollen, in eine streichfähige Paste übergeführt und durch Pinseln oder Siebdrucken auf die Oberfläche des Feststoffelektrolyten (1) aufgebracht und getrocknet wird.

2. Verfahren nach Anspruch 1, dadurch gekennzeichnet, dass die Atmosphäre reduzierend ist und Wasserstoff enthält.

3. Verfahren nach Anspruch 1, dadurch gekennzeichnet, dass die Atmosphäre oxydierend ist und Sauerstoff enthält.

4. Verfahren nach Anspruch 1, dadurch gekennzeichnet, dass die zur Imprägnierung verwendete Lösung Ionen mindestens eines Platinmetalls enthält.

5. Verfahren nach Anspruch 4, dadurch gekennzeichnet, dass das Platinmetall Platin ist.

6. Verfahren nach Anspruch 4, dadurch gekennzeichnet, dass die verwendete Lösung Ionen von Ruthenium und Iridium enthält.

7. Elektrisch leitende Schicht auf der Oberfläche eines Feststoffelektrolyten (1) bestehend aus einer elektronisch nichtleitenden Matrix aus einem organischen Kationenaustauschermaterial (2) auf der Basis eines perfluorierten Polymers mit Sulfosäuren, in der elektrisch leitende Partikel (3) bestehend aus Platinmetallen oder Platinmetalloxyden eingelagert sind, dadurch gekennzeichnet, dass die leitenden Partikel (3) einen Durchmesser von 1 bis 50 nm aufweisen und in einer solchen Verteilung vorliegen, dass sie unter sich in elektronisch leitender Verbindung stehen und einen mittleren Abstand voneinander von 1 bis 10 nm aufweisen.

## Claims

1. Method for the preparation of an electrically conducting layer on the surface of a solid electrolyte (1), characterized in that an organic cation exchanger material (2) based on a perfluorinated polymer containing sulphonic acid groups is swollen in a polar solvent, impregnated with a solution of noble metal ions, dried and exposed in a gas stream at a temperature of 50 to 250 °C to an oxidizing or a reducing atmosphere, the noble metal ions being converted into conducting particles (3) of 1 to 50 nm diameter which are in conducting contact with each other, that the cation exchanger material (2) doped in this manner is swollen in an organic polar solvent, converted into a brushable paste and applied by brushing or screenprinting to the surfaces of the solid electrolyte (1) and dried.

2. Method according to Claim 1, characterized in that the atmosphere is reducing and contains hydrogen.

3. Method according to Claim 1, characterized in that the atmosphere is oxidizing and contains oxygen.

4. Method according to Claim 1, characterized in that the solution used for the impregnation contains ions of at least one platinum metal.

5. Method according to Claim 4, characterized in that the platinum metal is platinum.

6. Method according to Claim 4, characterized in that the solution used contains ions of ruthenium and iridium.

7. Electrically conducting layer on the surface of a solid electrolyte (1) consisting of an electronically non-conducting matrix of an organic cation exchanger material (2), based on a perfluorinated polymer containing sulphonic acid groups in which electrically conducting particles (3) consisting of platinum metals or platinum metal oxides are included, characterized in that the conducting particles (3) have a diameter of 1 to 50 nm and are dispersed in such a manner that they are in electronically conducting contact among themselves and have a mean distance from each other of 1 to 10 nm.

## Revendications

1. Procédé de production d'une couche électriquement conductrice sur la surface d'un électrolyte solide (1), caractérisé en ce qu'une matière organique échangeuse de cations (2) à base d'un polymère perfluoré avec des acides sulfoniques est gonflée dans un solvant organique, imprégnée d'une solution d'ions de métal noble, séchée et exposée à un courant gazeux à une température de 50 à 250 °C en atmosphère oxydante ou réductrice de façon que les ions de métal noble soient convertis en particules conductrices (3) d'un diamètre de 1 à 50 nm se trouvant en relation mutuelle de conduction, que la matière échangeuse de cations (2) dopée de la sorte est gonflée dans un solvant organique polaire, convertie en une pâte se prêtant à l'étalement et est appliquée au pinceau ou par sérigraphie sur la surface de l'électrolyte solide (1) et séchée.

2. Procédé suivant la revendication 1, caractérisé en ce que l'atmosphère est réductrice et contient de l'hydrogène.

3. Procédé suivant la revendication 1, caractérisé en ce que l'atmosphère est oxydante et contient de l'oxygène.

4. Procédé suivant la revendication 1, caractérisé en ce que la solution utilisée pour l'imprégnation contient des ions d'au moins un métal de la mine du platine.

5. Procédé suivant la revendication 4, caractérisé en ce que le métal de la mine du platine est le platine.

6. Procédé suivant la revendication 4, caractérisé en ce que la solution utilisée contient des ions de ruthénium et d'iridium.

7. Couche électriquement conductrice sur la surface d'un électrolyte solide (1) consistant en une matrice non conductrice des électrons formée par une matière organique échangeuse de cations (2) à base d'un polymère perfluoré avec des acides sulfoniques, dans laquelle des particules (3) électriquement conductrices consistant en métaux de la mine du platine ou en oxydes de métaux de la mine du platine sont noyées, caractérisée en ce que les particules conductrices (3) ont un diamètre de 1 à 50 nm et se présentent dans une répartition telle qu'elles se trouvent en relation mutuelle de conduction électronique et ont une distance moyenne l'une à l'autre de 1 à 10 nm.

# FIG.1

Quellen des H$^+$- Ionenaustauschermaterials

Imprägnieren mit Metallionen

Trocknen

Reduzieren im H$_2$-Strom

Oxydieren im O$_2$-haltigen Gasstrom

Quellen in Dimethylformamid und Überführen in streichfähige Paste

Aufbringen der Paste auf Feststoffelektrolyt

Trocknen

# FIG. 2

4     3     2     1